# EUROPEAN PATENT APPLICATION

(11) **EP 1 940 124 A2**
(43) Date of publication of application: **02.07.2008**
(21) Application number: 07023277.2
(22) Date of filing: 30.11.2007
(51) Int. Cl.: H04L 29/08, H04L 12/58

(54) **Mobile communication terminal, and communication method for communication of location based message content**

(30) Priority: 01.12.2006 JP 2006326043
(71) Applicant: Funai Electric Co., Ltd., Daito-shi, Osaka 574-0013 (JP)
(72) Inventor: Takeshita, Masahiro, Daito-shi Osaka 574-0013 (JP); Masaki, Yasuo, Daito-shi Osaka 574-0013 (JP); Okazaki, Akinori, Daito-shi Osaka 574-0013 (JP); Kokado, Masao, Daito-shi Osaka 574-0013 (JP); Murakami, Sadanori, Daito-shi Osaka 574-0013 (JP); Zuo, Guokun, Daito-shi Osaka 574-0013 (JP); Tsubota, Hirono, Daito-shi Osaka 574-0013 (JP); Miyake, Yasunari, Daito-shi Osaka 574-0013 (JP)
(74) Representative: Grünecker, Kinkeldey, Stockmair & Schwanhäusser Anwaltssozietät

(57) **Abstract**

A communication terminal (70) includes a base station antenna (130) and the like, a measurement unit (162), a key operation unit (136), a memory (142), and a transmission control unit (186). The measurement unit (162) acquires element information from a radio wave. A message is entered at the key operation unit (136). A plurality of types of element information from transmission sources different from each other and the message are stored in correspondence in the memory (142). The transmission control unit (186) controls the base station antenna (130) and the like such that a message is transmitted when the combination of the received element information corresponds to the combination of element information stored in the memory (142).

## Description

### BACKGROUND OF THE INVENTION

### Field of the Invention

The present invention relates to communication terminals, particularly a communication terminal that is mobile by being carried by a user, and a communication method for such a communication terminal.

### Description of the Background Art

Japanese Patent Laying-Open No. 2002-051367 discloses a method of managing an operation of a communication terminal on a communication network according to the geographical position of the communication terminal. In accordance with the method, the location of the communication terminal in operation is constantly defined by position data determined according to at least one base station. This method is of the type that defines at least two different geographical zones and at least one operating feature of the communication terminal specific to each zone. Each zone is defined by the position data determined according to a group of at least one of base stations included in the relevant zone. The position data of the zone and the operating feature specific to the relevant zone are stored in the memory of the communication terminal. The position data of the communication terminal is compared with the position data of the zone to estimate which of the zones the communication terminal is located. When the communication terminal enters a zone, an operation specific to the zone is effected.

In accordance with the invention disclosed in the publication set forth above, access of a communication terminal to a zone will cause the communication terminal to automatically activate an operation specific to that zone without applying extra load to the communication network.

Japanese Patent Laying-Open No. 2003-143634 discloses a service activation method of a system including a mobile communication exchange, a plurality of wireless base stations connected to the mobile communication exchange, and a database connected to the mobile communication exchange. Service activation condition information for each user identifier is stored in the database. The service activation method includes first to third steps. In the first step, a wireless base station in response to a communication terminal entering the service area of that wireless base station transmits position registration information including the user identifier of the communication terminal to the mobile communication exchange. In the second step, the mobile communication exchange retrieves the service activation condition information corresponding to the user identifier based on the database. In the third step, the mobile communication exchange activates a service based on the service activation condition information when the position registration information is relevant to the service activation condition information.

In accordance with the invention disclosed in the publication set forth above, a third person can be notified of the whereabouts of the user by informing the third person intentionally about the entry of a communication terminal into a particular area, and/or a particular service can be activated automatically when the user enters a particular area.

Japanese Patent Laying-Open No. 11-068765 discloses a computer network system including a first computer connected to a network line, and a second computer connected to one of a plurality of connection devices that can connect/disconnect a computer on the network line. The first computer includes a resource information management unit and a resource information processing unit. The resource information management unit manages information related to an available resource via the network line. The resource information processing unit responds to a request of information related to an available resource from another computer to extract the content of the resource information management unit for transmission onto the network line. The second computer includes a resource setting processing unit. The resource setting processing unit carries out a resource setting process according to the content of the resource information transmitted from the resource information processing unit of the first computer, when the second computer is connected onto the network line via any of the plurality of connection devices.

According to the invention disclosed in the publication set forth above, a portable personal computer can be connected onto the network for usage at a roaming destination even in the case where the manager is not present.

Japanese Patent Laying-Open No. 2006-140691 discloses a remote control system including a wireless terminal device, and a plurality of household electrical appliances. The wireless terminal device carries user information that specifies the owner. The household electrical appliances form a domestic network through use of a gateway. The household electrical appliance carries registered user information corresponding to the user information, for each user with a wireless terminal device. The wireless terminal device transmits its own user information towards the domestic network when at least one of the plurality of household electrical appliances that is under its control is to be controlled. Each household electrical appliance receives the user information transmitted from the wireless terminal device to determine whether the user information matches its own registered user information, and effects control when the information matches.

According to the invention disclosed in the publication set forth above, each user can independently control a household electrical appliance even in the case where there are a plurality of users relative to the household electrical appliance.

Japanese Patent Laying-Open No. 2003-318913 discloses an in-hospital patient management system including an in-hospital network and a portable terminal. The in-hospital network includes a wireless LAN (Local Area Network) access point, and a host computer for managing the in-hospital information. The in-hospital network allows communication with a portable terminal carried by a patient in the hospital based on the IPV6 (Internet Protocol Version 6) protocol. The portable terminal can gain access to the wireless LAN.

According to the invention disclosed in the publication set forth above, the state of a patient at the hospital, starting from the admission to the leaving of an outpatient as well as an inpatient at the hospital can be managed integrally without an individual portable terminal position management system.

The invention disclosed in Japanese Patent Laying-Open No. 2002-051367 is not a sufficient method to be applied for use in allowing a third person to confirm the safety or trace the whereabouts of the person carrying the communication terminal. The location of the communication terminal is required to be identified only to a relative level in the invention disclosed in the aforementioned publication. However, it is desirable that the location of the person carrying the communication terminal should be identified as accurate as possible in order to allow a third person to confirm the safety or track the person carrying the communication terminal.

The other inventions disclosed in the remaining publications are disadvantageous in that there are not intended to be used to allow a third person to confirm the safety or track the person carrying the communication terminal.

### SUMMARY OF THE INVENTION

In view of the foregoing, an object of the present invention is to provide a communication terminal that can be applied to allow a third person to confirm the safety or track the person carrying the communication terminal.

A communication terminal according to an aspect of the present invention includes a communication unit for communication, an information acquirement unit for acquiring, from a radio wave received by the communication unit, element information corresponding to the radio wave, an input unit for entry of a message, a storage unit, a teaching control unit responding to entry of a message at the input unit to store a plurality of types of element information corresponding to each of a plurality of radio waves from transmission sources different from each other and the entered message in correspondence in the storage unit, and a transmission control unit transmitting, when a combination of a plurality of types of element information corresponding to each of the plurality of radio waves from transmission sources different from each other, acquired at the information acquirement unit, is identical to the combination of element information stored in the storage unit, the message corresponding to the combination of element information stored in the storage device.

Preferably, the information acquirement unit extracts identification information from the radio wave received by the communication unit. The teaching control unit stores a plurality of types of identification information corresponding to each of a plurality of radio waves from transmission sources different from each other and a message in correspondence. The transmission control unit transmits the message corresponding to a combination of the identification information stored in the storage unit when the combination of the plurality of types of identification information corresponding to each of the plurality of radio waves from transmission sources different from each other, acquired at the information acquiring unit, is identical to the combination of the identification information stored in the storage unit.

Particularly, the communication unit includes a network reception unit for receiving a radio wave transmitted by an access point, and a base station communication unit for communication with the base station. The information acquirement unit extracts identification information from the radio wave received by the network reception unit. The transmission control unit transmits a message corresponding to the combination of the identification information stored in the storage unit to the base station via the base station communication unit when the combination of the plurality of types of identification information corresponding to each of the plurality of radio waves from transmission sources, acquired at the information acquiring unit, is identical to the combination of identification information stored in the storage unit.

Preferably, the transmission control unit includes a detection unit for detecting the time, a text generation unit for generating text data indicating the message corresponding to the combination of identification information stored in the storage unit and information representing the time detected by the detection unit, when the combination of the plurality of types of element information corresponding to each of the plurality of radio waves from different transmission sources, acquired at the information acquiring unit, is identical to the combination of identification information stored in the storage unit, and a text data transmission unit transmitting the generated text data.

Preferably, the storage unit stores a message as audio data. The transmission control unit includes a detection unit for detecting the time, a call control unit for controlling the communication unit such that a calling signal is transmitted when the combination of the plurality of types of element information corresponding to each of the plurality of radio waves from the different transmission sources, acquired at the information acquiring unit, is identical to the combination of identification information stored in the storage unit, an audio generation unit generating audio data indicating the time when the communication unit receives a response signal corresponding to the calling signal, an audio transmission unit sequentially transmitting audio data corresponding to the message stored in the storage unit and audio data indicating the time, and a cutoff control unit for controlling the communication unit such that a signal indicating the end of a conversation is transmitted after transmission of audio data ends.

Preferably, the information acquirement unit includes an extraction unit for extracting a signal from the radio wave received by the communication unit, and a measurement unit for measuring, when the extraction unit extracts a signal, the intensity of the radio wave based on the signal extracted by the extraction unit to generate intensity information representing the intensity of the radio wave. The teaching control unit stores a plurality of types of intensity information corresponding to each of the plurality of radio waves from transmission sources different from each other and the message in correspondence. The transmission control unit transmits the message corresponding to the combination of the intensity information stored in the storage unit when the difference in intensity for all of the radio waves is within a range of a tolerable value between a combination of a plurality of types of intensity information corresponding to each of the plurality of radio waves from transmission sources different from each other, acquired at the information acquiring unit, and a combination of the intensity of a radio wave represented by the intensity information stored in the storage unit.

A communication method for a communication terminal according to an aspect of the present invention includes the steps of: receiving a radio wave; acquiring, from the received radio wave, element information corresponding to the radio wave; entering a message; when the message is entered, receiving a plurality of radio waves from transmission sources different from each other to store a plurality of types of element information corresponding to each of the plurality of radio waves and an entered message in correspondence; and receiving a plurality of radio waves from transmission sources different from each other, and transmitting a message corresponding to a combination of element information stored in the storage unit when the combination of a plurality of types of element information corresponding to each of the plurality of radio waves thereto is identical to the combination of element information stored in the storage unit.

The communication terminal of the present invention can be applied to allow a third person to confirm the safety or track the person carrying the communication terminal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram representing communication in a safety confirmation system according to an embodiment of the present invention.

Fig. 2 represents a configuration of a safety confirmation system according to an embodiment of the present invention.

Fig. 3 represents a configuration of a communication terminal according to an embodiment of the present invention.

Fig. 4 is a flowchart of the control procedure of a teaching process according to an embodiment of the present invention.

Fig. 5 is a flowchart of the control procedure of a message notification process according to an embodiment of the present invention.

Fig. 6 is a flowchart of the control procedure of a mail transmission process according to an embodiment of the present invention.

Fig. 7 is a flowchart of the control procedure of a calling process according to an embodiment of the present invention.

Fig. 8 is a schematic diagram representing a message and other information stored in the memory as a result of the teaching process of the present embodiment being effected several times.

Fig. 9 is a schematic diagram representing the route of mail according to a first modification of an embodiment of the present invention.

### DESCRIPTION OF THE PREFERRED EMBODIMENTS

Embodiments of the present invention will be described hereinafter with reference to the drawings. In the following description, the same elements have the same reference characters allotted. Their designation and feature are also the same. Therefore, detailed description thereof will not be repeated.

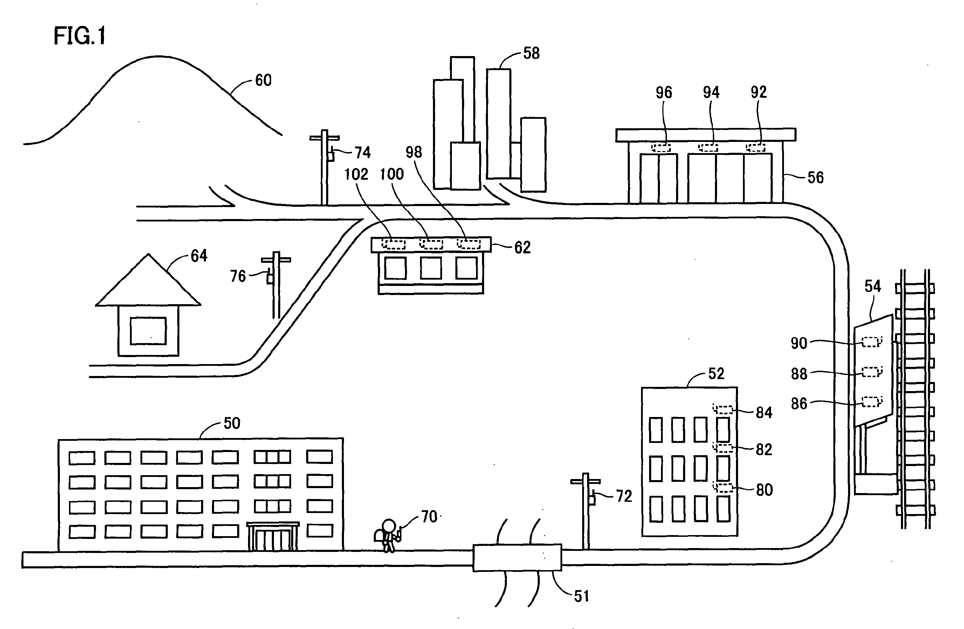

Communication in a safety confirmation system according to an embodiment of the present invention will be described with reference to Fig. 1. Referring to Fig. 1, a first base station 72, a second base station 74, and a third base station 76 are situated on a relevant utility pole. An in-company access point 80 of A Corporation, an in-company access point 82 of B Corporation, and an in-company access point 84 of C Corporation are situated in a business complex 52. An in-station access point 86 of A Corporation, an in-station access point 88 of B Corporation and an in-station access point 90 of C Corporation are situated in a station 54. An in-store access point 92 of A Corporation, an in-store access point 94 ofB Corporation and an in-store access point 96 of C Corporation are situated in a convenience store 56. An in-library access point 98 of A Corporation, an in-library access point 100 of B Corporation and in-library access point 102 of C Corporation are situated in a library 62.

A child carrying a communication terminal 70 leaves school 50 and enters a business complex 52 to take a private lesson at a private lesson school that is a tenant of business complex 52. After the child finishes the private lesson and leaves business complex 52, the child walks along the road before station 54 to stop over at convenience store 56. The child then leaves convenience store 56 and passes library 62 after the closing hour to arrive at his/her home 64. At the time when the child arrives at business complex 52, when the child passes the front of station 54, when the child arrives at convenience store 56, and when the child passes the front of library 62, communication terminal 70 transmits a mail to his/her mother's communication terminal 71. Each mail indicates the arrival or passage of the child relative to each facility as well as the time of transmission. As an alternative to the transmission of a mail, a phone call can be made to mother's communication terminal 71 to notify the arrival and passage of each facility and the time of transmission time through voice.

In the present embodiment, communication terminals 70 and 71 are PHS (Personal Handy Phone System) terminals. Furthermore, a device designated with the term "base station" implies a communication device that relays conversation and communication between a communication terminal and a telephone network. Such a communication device is generically referred to as "base station" in the present embodiment. Furthermore, a device designated with the term "access point" implies a communication device for relay between a computer and a computer network. In the present embodiment, such a communication tool is generically referred to as "access point". The term "... Corporation" corresponding to an access point refers to the designation of the organization that runs an information provider service by means of an access point.

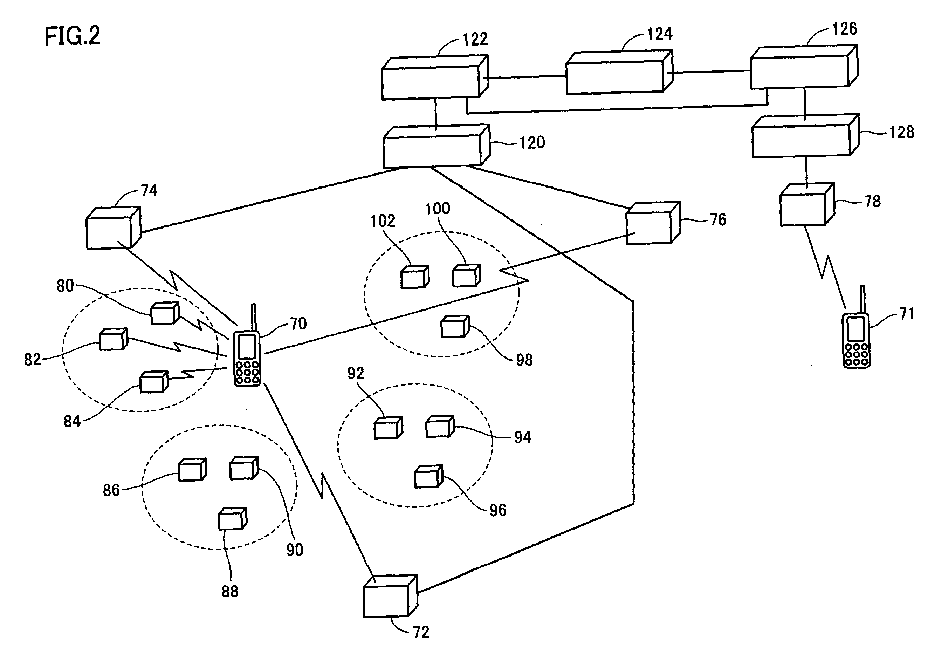

Referring to Fig. 2, the safety confirmation system of the present embodiment includes communication terminals 70 and 71, first base station 72, second base station 74, third base station 76, in-company access point 80 of A Corporation, in-company access point 82 ofB Corporation, in-company access point 84 of C Corporation, in-station access point 86 of A Corporation, in-station access point 88 of B Corporation, in-station access point 90 of C Corporation, in-store access point 92 of A Corporation, in-store access point 94 of B Corporation, in-store access point 96 of C Corporation, in-library access point 98 of A Corporation, in-library access point 100 of B Corporation, in-library access point 102 of C Corporation, PHS connection devices 120 and 128, in-city exchanges 122 and 126, and a central control station 124.

First base station 72, second base station 74, and third base station 76 are connected to PHS connection device 120. PHS connection device 120 is connected to in-city exchange 122. In-city exchanges 122 and 126 are connected to central control station 124. PHS connection device 128 is also connected to in-city exchange 126. Fourth base station 78 is connected to PHS connection device 128. Central control station 124 is also connected to a city telephone network not shown.

Communication terminal 70 inputs/outputs a signal through wireless communication to/from first base station 72, second base station 74, and third base station 76. Accordingly, communication terminal 70 receives various information from first base station 72, second base station 74, and third base station 76, and also transmits various information to first base station 72, second base station 74, and third base station 76.

Communication terminal 71 transfers a signal with respect to fourth base station 78. Accordingly, communication terminal 71 receives and transmits various information from/to fourth base station 78.

The base station in communication with each of communication terminals 70 and 71 changes in accordance with the current position of communication terminals 70 and 71.

First base station 72, second base station 74, and third base station 76 receive a signal from communication terminal 70, and transmit the received signal to PHS connection device 120. First base terminal 72, second base terminal 74, and third base station 76 receive a signal from PHS connection device 120 and transmit the received signal to communication terminal 70.

PHS connection device 120 transmits the signal received from first base station 72 , second base station 74, and third base station 76 to in-city exchange 122, and the signal from in-city exchange 122 to first base station 72, second base station 74, and third base station 76.

In-city exchange 122 transmits a signal from PHS connection device 120 to in-city exchange 126 under control of central control station 124, and the signal from in-city exchange 126 to PHS connection device 120 under control of central control station 124.

In-city exchange 126 transmits the signal from PHS connection device 128 to in-city exchange 122 under control of central control station 124, and a signal from in-city exchange 122 to PHS connection device 128.

PHS connection device 128 transmits the signal from in-city exchange 126 to fourth base station 78, and a signal from fourth base station 78 to in-city exchange 126.

Fourth base station 78 receives a signal from communication terminal 71, and transmits the received signal to PHS connection device 128. Fourth base station 78 receives a signal from PHS connection device 128, and transmits the received signal to communication terminal 71.

In-company access point 80 of A Corporation, in-company access point 82 of B Corporation, in-company access point 84 of C Corporation, in-station access point 86 of A Corporation, in-station access point 88 ofB Corporation, in-station access point 90 of C Corporation, in-store access point 92 of A Corporation, in-store access point 94 ofB Corporation, and in-store access point 96 of C Corporation, in-library access point 98 of A Corporation, in-library 100 of B Corporation, in-library access point 102 of C Corporation transmit a signal towards communication terminal 70. In the present embodiment, these access points transmit a signal according to IEEE (The Institute of Electrical and Electronic Engineers, Inc.) 802.11.

The hardware of PHS connection devices 120 and 128, in-city exchanges 122 and 126, and central control station 124 as well as the control executed thereby are well known. Therefore, detailed description thereof will not be repeated here.

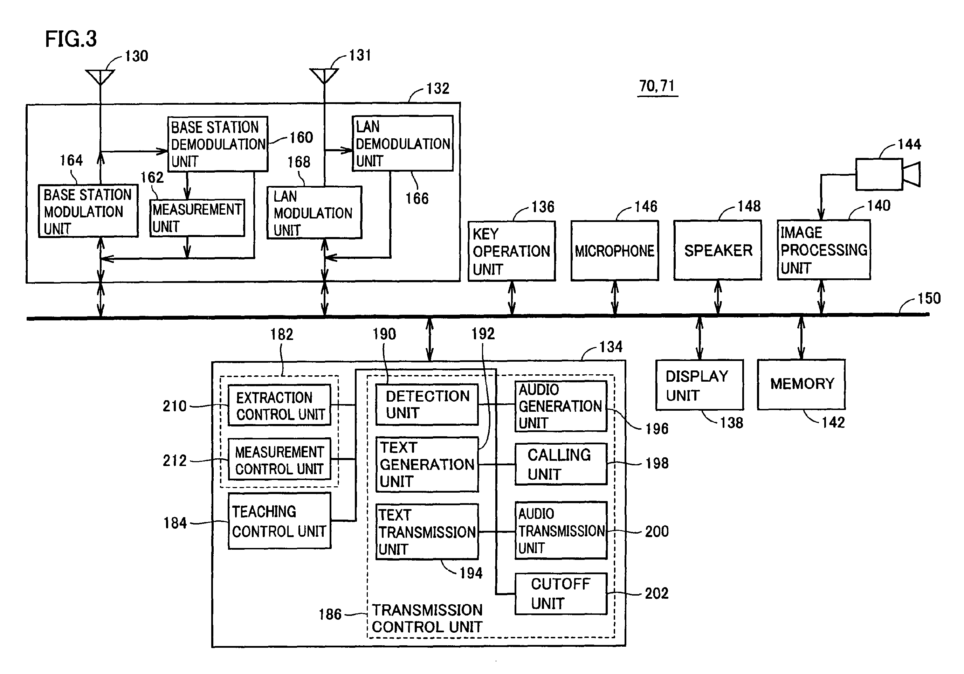

A configuration of communication terminal 70 or 71 will be described with reference to Fig. 3. Referring to Fig. 3, communication terminal 70 or 71 includes a base station antenna 130, an LAN antenna 131, a transmission and reception unit 132, a control unit 134, a key operation unit 136, a display unit 138, an image processing unit 140, a memory 142, a camera 144, a microphone 146, a speaker 148,and a bus 150.

Base station antenna 130 receives a signal transmitted via first base station 72, second base station 74, third base station 76 or fourth base station 78, and transmits a signal from transmission and reception unit 132 to first base station 72 second base station 74, third base station 76 or fourth base station 78. LAN antenna 131 receives a signal as a radio wave from in-company access point 80 of A Corporation or from another access point, and transmits a signal from transmission and reception unit 132 to in-company access point 80 of A Corporation or another access point.

Transmission and reception unit 132 converts the signal from base station antenna 130 into a baseband signal for output onto bus 150, and modulates a signal from bus 150 in a predetermined scheme for output to base station antenna 130. Transmission and reception unit 132 converts the signal from LAN antenna 131 into a baseband signal for output onto bus 150, and modulates a signal from bus 150 in a predetermined scheme for output to LAN antenna 131.

Control unit 134 controls each element constituting communication terminal 70 or communication terminal 71. Key operation unit 136 allows the user to enter a designation and/or text data. Display unit 138 includes a liquid crystal display to provide various information as visual information to the user. Image processing unit 140 compresses image data from camera 144 based on MPEG (Moving Picture Experts Group), and decompresses the image data compressed by MPEG. Various types of information are stored in memory 142. Video such as the landscape, a store, the traffic of a road and the like can be taken by camera 144. Microphone 146 converts sound into an electrical signal that can be utilized by control unit 134. Speaker 148 converts an electrical signal into sound. Bus 150 serves to transfer data between each of the units constituting communication terminal 70 or communication terminal 71.

Transmission and reception unit 132 includes a base station demodulation unit 160, a measurement unit 162, a base station modulation unit 164, a LAN demodulation unit 166, and a LAN modulation unit 168.

Base station demodulation unit 160 functions to demodulate an electrical signal from the radio wave received from first base station 72, second base station 74, third base station 76 or fourth base station 78. Measurement unit 162 functions to measure the intensity of a radio wave received from first base station 72, second base station 74, third base station 76 or fourth base station 78. In the present embodiment, "intensity of a radio wave" implies the magnitude level of at least one of the electric field and magnetic field. This "magnetic field and electric field" refers to the electric field or magnetic field generated by the radio wave received by base station antenna 130. Base station modulation unit 164 functions to modulate a signal from bus 150 to a signal that can be demodulated by first base station 72, second base station 74, third base station 76 or fourth base station 78. LAN demodulation unit 166 functions to demodulate a signal received as a radio wave from an access point. LAN modulation unit 168 functions to modulate a signal from bus 150 to a signal that can be demodulated by an access point.

Control unit 134 includes an acquirement control unit 182, a teaching control unit 184, and a transmission control unit 186.

Acquirement control unit 182 functions to control measurement unit 162 such that element information for each radio wave corresponding to different transmission sources is generated. In the present embodiment, the intensity information and identification information are generically referred to as "element information". The intensity information and identification information will be described afterwards. Teaching control unit 184 functions to control memory 142 such that element information and a message are stored in correspondence when a message is entered at key operation unit 136. The plurality of types of element information are set in correspondence by teaching control unit 184. Transmission control unit 186 functions to control base station modulation unit 164 and base station antenna 130 such that a message corresponding to a combination of the element information is transmitted.

Acquirement control unit 182 includes an extraction control unit 210 and a measurement control unit 212. Extraction control unit 210 functions to control LAN demodulation unit 166 such that a signal is extracted by demodulation from the radio wave received at LAN antenna 131. In the present embodiment, information represented by this signal is qualified as the identification information to identify an access point that is the transmission source. In the present embodiment, an SSID (Service Set Identifier) is employed as this information. Measurement control unit 212 controls base station demodulation unit 160 such that intensity information is generated for each radio wave transmitted from different transmission sources. "Intensity information" in the present embodiment refers to information representing the intensity of a radio wave.

Transmission control unit 186 includes a detection unit 190, a text generation unit 192, a text transmission unit 194, an audio generation unit 196, a calling unit 198, an audio transmission unit 200, and a cutoff unit 202.

Detection unit 190 detects the time. Text generation unit 192 produces text data representing a message. Text transmission unit 194 controls base station modulation unit 164 and base station antenna 130 such that the text data generated by text generation unit 192 is transmitted. Audio generation unit 196 generates audio data indicating the time detected by detection unit 190. Calling unit 198 controls base station antenna 130 and transmission and reception unit 132 such that a calling signal is transmitted. Audio transmission unit 200 controls base station modulation unit 164 and base station antenna 130 such that audio data indicating a time and a message are transmitted when base station demodulation unit 164 demodulates a response signal corresponding to a calling signal. Cutoff unit 202 controls base station modulation unit 164 and base station antenna 130 such that a signal indicating the end of a conversation is transmitted when transmission of the audio data indicating the time and the message ends.

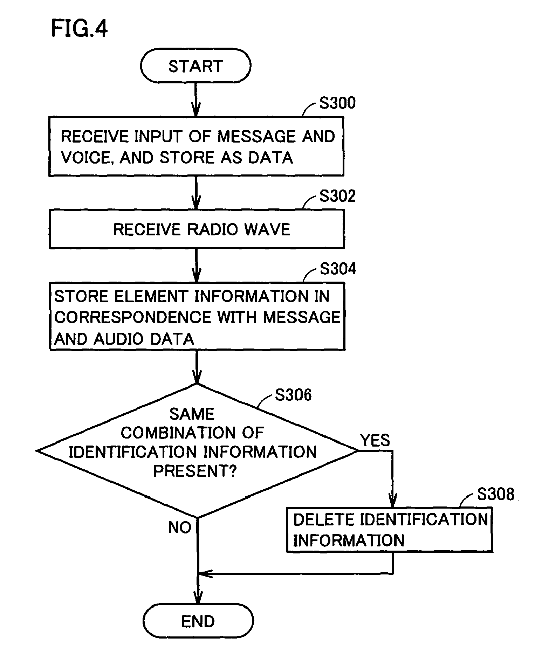

The program executed at communication terminal 70 corresponding to Fig. 4 relates to a teaching process, that is a registration process initially carried by the operator (also termed TEACHING hereinafter). The control set forth below is executed.

At step S300, the operator to perform TEACHING stands holding communication terminal 70 at a site from which a message is to be transmitted from communication terminal 70. The operator of communication terminal 70 operates key operation unit 136 according to a predetermined procedure. Key operation unit 136 generates a signal corresponding to this operation. The generated signal is output to teaching control unit 184. Teaching control unit 184 controls display unit 138 in response to an input of this signal. Display unit 138 displays information prompting input of a message according to control of teaching control unit 184.

The operator viewing this information operates key operation unit 136 to enter a message. When a message is entered, key operation unit 136 generates a signal corresponding to this message. The generated signal is provided to teaching control unit 184. Teaching control unit 184 stores data corresponding to the generated signal in memory 142. Accordingly, a message is stored in memory 142.

When a message is stored, teaching control unit 184 controls display unit 138. Display unit 138 displays information prompting entry of a voice message according to control of teaching control unit 184.

In response to this information , the operator enters a voice message through microphone 146. When a voice message is entered, microphone 146 generates a signal corresponding to the voice message. The generated signal is provided to teaching control unit 184. Teaching control unit 184 stores data corresponding to the generated signal in memory 142. Memory 142 stores the data as an audio file. Accordingly, audio data is stored in memory 142.

When audio data is stored in memory 142, teaching control unit 184 controls detection unit 190. Detection unit 190 detects the time under control of teaching control unit 184. The information indicating the detected time is stored at an address having a predetermined relationship with the address where the message is stored or the address where audio data is stored. Accordingly, information of the time when the message and/or audio data was recorded can be stored in corresponding relationship.

When the time information is stored, teaching control unit 184 controls display unit 138. Display unit 138 displays information prompting entry of information indicating the current position of communication terminal 70 under control of teaching control unit 184.

The operator viewing this information operates key operation unit 136 to enter information indicating the current position of communication terminal 70. When this information is entered, key operation unit 136 generates a signal corresponding to this information. The generated signal is provided to teaching control unit 184. Teaching control unit 184 stores data corresponding to the generated signal in memory 142, Accordingly, the position data is stored in memory 142. The position data is set corresponding to a message and/or audio data, likewise the time information.

At step S302, base station antenna 130 receives a radio wave from first base station 72, second base station 74 and third base station 76. The radio wave is converted into an electrical signal by base station antenna 130 to be output to base station demodulation unit 160. Measurement control unit 212 controls base station demodulation unit 160. Base station demodulation unit 160 provides an electrical signal representing the radio wave from first base station 72, an electrical signal representing a radio wave from second base station 74, and an electrical signal representing a radio wave from third base station 76 sequentially to measurement unit 162. Measurement unit 162 sequentially measures the intensity of each radio wave to generate intensity information. The intensity information is provided to teaching control unit 184.

LAN antenna 131 receives a radio wave from an access point. The radio wave is converted to an electrical signal by LAN antenna 131 to be provided to LAN demodulation unit 166. Extraction control unit 210 controls LAN demodulation unit 166. LAN demodulation unit 166 sequentially provides an electrical signal representing a radio wave from an access point to measurement unit 162. This signal represents an SSID, which is provided to teaching control unit 184.

At step S304, teaching control unit 184 stores the intensity information and identification information indicating an SSID in memory 142. These information are stored at an address having a predetermined relationship with the address where a message and/or audio data is stored at step S300. Accordingly, these information are stored in corresponding relationship with respect to a message and/or audio data stored at step S300.

At step S306, teaching control unit 184 determines whether there are two or more sets of the same combination of identification information stored in memory 142. When determination is made that there are two or more sets of the same combination (YES at step S306), control proceeds to step S308, otherwise (NO at step S306), the process ends. At step S308, teaching control unit 184 deletes the identification information stored at step S304 from the combinations of identification information stored in memory 142.

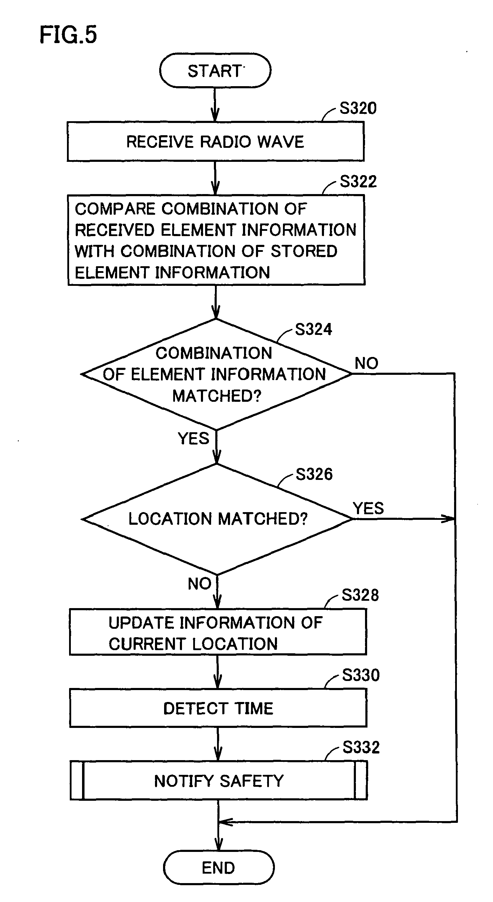

The program executed at communication terminal 70 corresponding to Fig. 5 relates to notification of a message. The control set forth below is executed.

At step S320, base station antenna 130 receives a radio wave from first base station 72, second base station 74, and third base station 76. The radio wave is converted into an electrical signal by base station antenna 130 to be provided to base station demodulator 160. Measurement control unit 212 controls base station demodulation unit 160. Base station demodulation unit 160 sequentially provides an electrical signal representing a radio wave from first base station 72, an electrical signal representing a radio wave from second base station 74, and an electrical signal representing a radio wave from third base station 76 to measurement unit 162. Measurement unit 162 sequentially measures the intensity of each radio wave to generate intensity information. The intensity information is provided to text generation unit 192 and audio generation unit 196.

LAN antenna 131 receives a radio wave from an access point. The radio wave is converted into an electrical signal by LAN antenna 131 to be provided to LAN demodulation unit 166. Extraction control unit 210 controls LAN demodulation unit 166. LAN demodulation unit 166 sequentially provides an electrical signal representing a radio wave from an access point to measurement unit 162. This signal represents an SSID, which is provided to text generation unit 192 and audio generation unit 196.

At step S322, text generation unit 192 and audio generation unit 196 compare the combination of intensity information and the combination of identification information input at step S320 with the combination of intensity information and the combination of identification information stored in memory 142. In the present embodiment, text generation unit 192 and audio generation unit 196 execute this comparison independent of each other.

At step S324, text generation unit 192 and audio generation unit 196 determine whether at least one of the combination of the intensity information and the identification information input at step S320 matches at least one of the combination of the intensity information and the identification information stored in memory 142. In the present embodiment, text generation unit 192 and audio generation unit 196 first determine whether the combination of identification information matches or not, and then, when not matching, determines whether the combination of intensity information matches or not. Determination of a matching combination of intensity information is made in the event of the intensity difference for respective radio waves being within a range of a tolerable value, even if the intensity of the radio wave representing the intensity information does not completely match. In the present embodiment, text generation unit 192 and audio generation unit 196 carry out such determination independent of each other. When determination is made of a match (YES at step S324), control proceeds to step S326, otherwise (NO at step S324), the process ends.

At step S326, text generation unit 192 and audio generation unit 196 read out information corresponding to the combination of intensity information or the combination of identification information input at step S320 from the information stored in memory 142. When such information is read out, text generation unit 192 and audio generation unit 196 determine whether the position of communication terminal 70 indicated by the information read out matches the position of communication terminal 70 indicated by the position information stored at a predetermined address in memory 142. In the present embodiment, text generation unit 192 and audio generation unit 196 carry out such determination independent of each other. When determination is made of a match (YES at step S326), the process ends, otherwise (NO at step S326), control proceeds to step S328.

At step S328, text generation unit 192 stores information of the current position corresponding to the combination of intensity information or identification information input at step S320, at the "predetermined address" of memory 142 mentioned in the description of step S326. Accordingly, information of the current position stored at the "predetermined address" is updated.

At step S330, text generation unit 192 controls detection unit 190. Detection unit 190 detects the time under control of text generation unit 192.

At step S332, text generation unit 192 and audio generation unit 196 execute a process to notify communication terminal 71 of the safety. The process executed at this step corresponds to the value of a flag stored in memory 142. In the present embodiment, a process of sending a mail, or a process of making a phone call is effected according to the value of the flag. The process of transmitting a mail corresponds to steps S340-S344 that will be described afterwards. The process of making a phone call corresponds to steps S360-S370 that will be described afterwards.

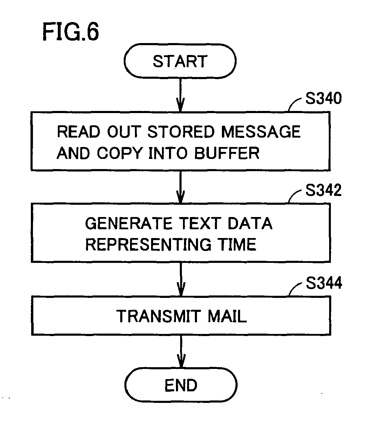

The program executed at communication terminal 70 corresponding to Fig. 6 relates to mail transmission. The control set forth below is executed.

At step S340, text generation unit 192 reads out from memory 142 a message corresponding to the element information determined as matching at step S324. When a message is read out, text generation unit 192 copies the data into its internal buffer (not shown).

At step S342, text generation unit 192 generates text data representing the time detected by detection unit 190 at step S330. When such text data is generated, text generation unit 192 stores the text data in its internal buffer. Accordingly, that text data and the message stored at step S340 are united as one text data. Thus, text data representing a message and time is generated by the union of such data into one.

At step S344, text generation unit 192 provides text data representing the message and time stored in the buffer at steps S340 and S342 to transmission and reception unit 132 in the form of a mail. When a mail is output, text transmission unit 194 controls base station antenna 130 and transmission and reception unit 132. Base station antenna 130 and transmission and reception unit 132 transmit the mail to a base station establishing communication under control of text transmission unit 194. The mail destination is communication terminal 71. In the present embodiment, the mail address of communication terminal 71 is stored in advance in memory 142. The relevant base station transmits the mail to PHS connection device 120. PHS connection device 120 transmits that mail to in-city exchange 122. In-city exchange 122 transmits the mail to in-city exchange 126 under control of central control station 124. In-city exchange 126 transmits the mail to PHS connection device 128. PHS connection device 128 transmits the mail to communication terminal 71.

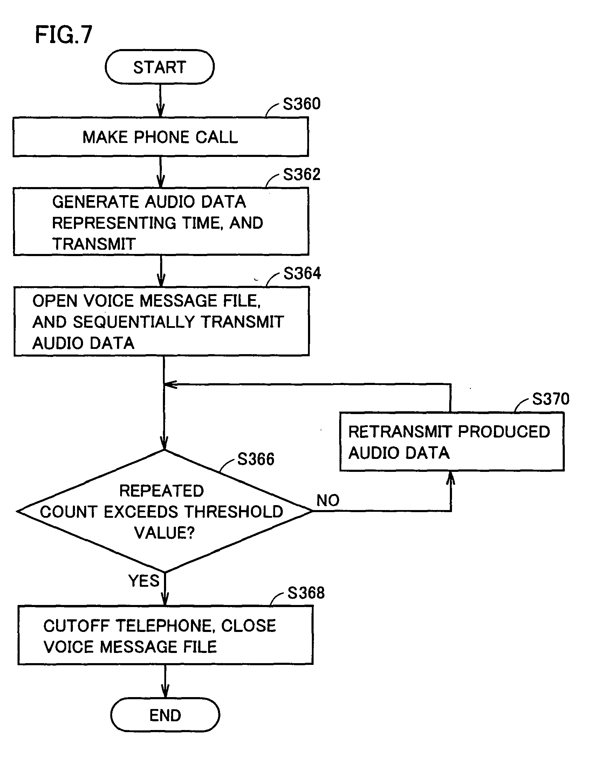

The program executed at communication terminal 70 corresponding to Fig. 7 relates to calling. The control set forth below is executed.

At step S360, calling unit 198 controls base station antenna 130 and transmission and reception unit 132. Base station antenna 130 and transmission and reception unit 132 transmit information for calling towards communication terminal 71 under control of calling unit 198. The telephone number required for transmission is stored in advance in memory 142. Base station antenna 130 and transmission and reception unit 132 receive the information representing that communication terminal 71 will respond to the call. Upon reception of this information, transmission and reception unit 132 provides an electrical signal representing that information to audio generation unit 196 and audio transmission unit 200.

At step S362, audio generation unit 196 generates audio data representing the time detected by detection unit 198 at step S330 when information representing that the call is to be responded is output. Upon generation of audio data, audio generation unit 196 stores the audio data in an internal buffer not shown in audio transmission unit 200.

At step S364, audio transmission unit 200 opens the audio file corresponding to the element information determined as matching at step S324. In response to the opening of the audio file, audio transmission unit 200 controls base station antenna 130 and transmission and reception unit 132. Base station antenna 130 and transmission and reception unit 132 sequentially transmit audio data indicating the time and audio data included in the audio file under control of audio transmission unit 200.

At step S366, audio transmission unit 200 refers to a parameter stored in its internal buffer. This parameter represents the number of times the audio data has been transmitted. Upon referring to the parameter, audio transmission unit 200 determine whether the transmitted count of audio data has exceeded a threshold value based on the value of the parameter. When determination is made that the count has exceeded the threshold value (YES at step S366), control proceeds to step S368, otherwise (NO at step S366), control proceeds to step S370.

At step S368, audio transmission unit 200 sets the value of the parameter stored in its internal buffer to "0". Following setting of the parameter value, audio transmission unit 200 closes the audio file that has been opened at step S364. When the audio file has been closed, cutoff unit 202 controls base station antenna 130 and transmission and reception unit 132. Base station antenna 130 and transmission and reception unit 132 transmit to communication terminal 71 the information to cut off the conversation under control of cutoff unit 202.

At step S3 70, audio transmission unit 200 adds "1" to the value of the parameter stored in its internal buffer. When the value of the parameter is incremented by "1", audio transmission unit 200 controls base station antenna 130 and transmission and reception unit 132. Base station antenna 130 and transmission and reception unit 132 sequentially transmit the audio data representing the time and the audio data included in the audio file under control of audio transmission unit 200.

An operation of communication terminal 70 according to the configuration and flow chart set forth above will be described hereinafter.

### [Teaching]

It is here assumed that the mother of the child first operates communication terminal 70 to be carried by the child. The mother stands before her home 64 with communication terminal 70 in her hand to enter a message, a voice/sound, and the current position. Memory 142 stores the message, the audio data, and the time (step S300).

When a message or the like is stored, base station antenna 130 receives a radio wave from first base station 72, second base station 74, and third base station 76. Measurement unit 162 sequentially measures the intensity of each radio wave from a relevant base station to generate intensity information. Although a radio wave is to be received from the closest access point at LAN antenna 131, a radio wave cannot be received since an access point for transmission of a radio wave is absent (step S302).

When intensity information is acquired, memory 142 stores the intensity information, message, audio data, time, and current position in correspondence (step S304).

When intensity information and the like are stored, teaching control unit 184 determines whether there are two or more sets of the same combination of identification information stored in memory 142 (step S306). If two or more sets are not present in this case (NO at step S306), the TEACHING process at the front of one's home 64 ends.

Then, the mother stands at the road branching to a mountain 60, holding communication terminal 70 in her hand and enters a message, voice/sound, and current position. Through the process of step S300, base station antenna 130 receives a radio wave from first base station 72 , second base station 74, and third base station 76. Measurement unit 162 sequentially measures the intensity of the radio wave from a relevant base station to generate intensity information. LAN antenna 131 receives a radio wave from an access point. LAN demodulation unit 166 extracts an electrical signal representing an SSID from the received radio wave. Accordingly, the identification information is extracted (step S302).

Upon acquiring the intensity information and identification information, memory 142 stores in correspondence the intensity information, the identification information indicating an SSID, the message, the audio data, the time, and the current position (step S304). Then, the process of step S306 is repeated. Thus, the TEACHING process at the road branching to mountain 60 ends.

Then, the mother stands at the road branching to A city 58, holding communication terminal 70 in her hand and enters a message, voice/sound, and current position. Then, the process from step S300 to step S304 is repeated. When the process of step S304 ends, teaching control unit 184 determines whether there are two or more sets of the same combination of identification information in the identification information stored in memory 142 (step S306). In this case, the last stored identification information is the information transmitted from the access point situated at library 62. This information is identical to the combination of information received during the TEACHING at the road branching to mountain 60. Since there are two or more sets of the same combination among the combination of identification information stored in memory 142 at this stage (YES at step S306), teaching control unit 184 deletes the identification information lastly stored at step S304 from the combination of identification information stored in memory 142 (step S308). Thus, the TEACHING process at the road branching to A city 58 ends.

In the present embodiment, the mother carries out a similar TEACHING process in front of convenience store 56, in front of station 54, in front of business complex 52, at the foot of a bridge 51, and in front of school 50.

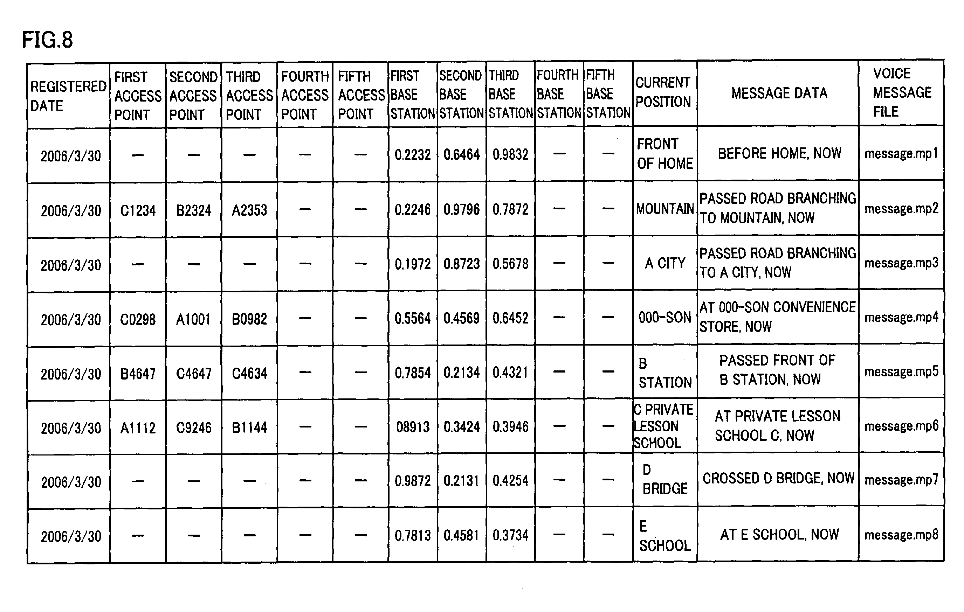

Messages as well as other information stored in memory 142 as a result of the repeated execution of a TEACHING process will be described hereinafter with reference to Fig. 8. It is appreciated from Fig. 8 that, in the present embodiment, memory 142 can store an SSID up to five access points and the intensity of a radio wave up to five base stations as the intensity information. Although the number of access points for storage of an SSID and the number of base stations for storage of the intensity of a radio wave are arbitrary and is not limited to five, it is desirable to allow storage of the intensity of a radio wave from at least three base stations. This is because the whereabouts can be identified accurately by determining the location of communication terminal 70, i.e. the person carrying communication terminal 70, based on the intensity of a radio wave of at least three sites.

### [Mail Transmission]

It is now assumed that the child carrying communication terminal 70 has passed the foot of bridge 51 shown in Fig. 1. Base station antenna 130 receives a radio wave from first base station 72, second base station 74 and third base station 76. Measurement unit 162 sequentially measures the intensity of a radio wave from a relevant base station to generate intensity information. Although a radio wave is to be received from the closest access point at LAN antenna 131, a radio wave cannot be received since an access point to transmit a radio wave is absent (step S320).

When the intensity information is acquired, text generation unit 192 and audio generation unit 196 compare the combination of intensity information input at step S320 and the combination of intensity information stored in memory 142 (step S322).

Following the comparison set forth above, text generation unit 192 and audio generation unit 196 determine whether the combination of intensity information input at step S320 matches the combination of intensity information stored in memory 142 (step S324). Assuming that the intensity difference for all radio waves is within a range of a tolerable value between the combination of the intensity of the received radio waves and the combination of the intensity information stored in memory 142 in this case (YES at step S324), text generation unit 192 and audio generation unit 196 read out the information corresponding to the combination of identification information input at step S320 from the information stored in memory 142. Accordingly, information of the current position or other information is read out. In this case, information of the current position is "D bridge". Upon reading out the information, text generation unit 192 and audio generation unit 196 determine whether the position of communication terminal 70 indicated by the information read out matches the position of communication terminal 70 indicated by the position information stored at a predetermined address in memory 142 (step S326). Assuming that the position information indicates "E school" in this case (NO at step S326), text generation unit 192 updates the information of the current position stored at the predetermined address in memory 142 (step S328).

When the information stored at the predetermined address in memory 142 is updated, detection unit 190 detects the time under control of text generation unit 192 (step S330).

When the time is detected, text generation unit 192 copies a message corresponding to the element information determined as matching at step S324 to the buffer (step S340). The message copied at this point of time is information of " Crossed D bridge, now". When a message is copied into the buffer, text generation unit 192 generates text data representing the time (step S342). When text data is generated, text generation unit 192 transmits the message and text data representing the time to communication terminal 71 in the form of a mail (step S344).

Then, it is assumed that the child carrying communication terminal 70 enters business complex 52 shown in Fig. 1 in which a private lesson school "C" is a tenant. Base station antenna 130 receives a radio wave from first base station 72, second base station 74, and third base station 76. Measurement unit 162 sequentially measures the intensity of a radio wave from a relevant base station to generate intensity information. LAN antenna 131 receives a radio wave from an access point. LAN demodulation unit 166 extracts an electrical signal representing a radio wave from an access point as a signal of identification information representing an SSID (step S320).

Upon acquirement of the intensity information and identification information, text generation unit 192 and audio generation unit 196 compare the combination of identification information input at step S320 with the combination of identification information stored in memory 142 (step S322).

Following comparison, text generation unit 192 and audio generation unit 196 determine whether the combination of identification information input at step S320 matches the combination of identification information stored in memory 142 (step S324). Assuming that the combination of the received identification information matches the combination of identification information stored in memory 142 (YES at step S324), text generation unit 192 and audio generation unit 196 read out information corresponding to the combination of identification information input at step S320 from the information stored in memory 142. In this case, the information of the current position is "C private lesson school". When the information is read out, text generation unit 192 and audio generation unit 196 determine whether the position of communication terminal 70 indicated by the information read out matches the position of communication terminal 70 indicated by the position information stored at a predetermined address in memory 142 (step S326). Since the position information is D bridge in this case (NO at step S326), text generation unit 192 updates the information of the current position stored at the "predetermined address" in memory 142 (step S328).

By executing the process of steps S330 and et seq., a mail is transmitted to communication terminal 71.

### [Making Phone Call]

When the time is detected at step S330, base station antenna 130 and transmission and reception unit 132 transmit information for calling towards communication terminal 71 under control of calling unit 198 (step S340).

Upon the return of the information representing that communication terminal 71 responds to the call, audio generation unit 196 generates audio data representing the time detected by detection unit 190 at step S330 (step S362).

When audio data is generated, base station antenna 130 and transmission and reception unit 132 sequentially transmit the audio data representing the time and the audio data included in the audio file under control of audio transmission unit 200 (step S364).

Upon the sequential transmission of audio data representing the time and audio data included in the audio file, audio transmission unit 200 determines whether the transmitted count of audio data has exceeded a threshold value (step S366). If the count has not exceeded the threshold value in this case (NO at step S366), audio transmission unit 200 adds "1" " to the value of the parameter stored in its internal buffer. When the value of the parameter is incremented by "1", base station antenna 130 and transmission and reception unit 132 sequentially transmit the audio data representing the time and the audio data included in the audio file under control of audio transmission unit 200 (step S370).

Then, following several repetitions of the process of step S366 and the process of step S370, when the transmitted count of audio data exceeds the threshold value (YES at step S366), base station antenna 130 and transmission and reception unit 132 transmit information to cut off the conversation towards communication terminal 71 under control of cutoff unit 202 (step S368).

Thus, communication terminal 70 of the present embodiment sends a mail or makes a phone call towards communication terminal 71 at the arrival or passage of a predetermined site. Communication terminal 70 determines the arrival or passage of a predetermined site based on whether the combination of element information stored in memory 142 corresponds to the combination of element information corresponding to the received radio wave. Accordingly, arrival or passage of a predetermined site can be detected more accurately as compared to the case where determination is made based on whether the requirement related to the element information stored in memory 142 satisfies the combination of element information corresponding to the received radio wave. As a result, a communication terminal that can be applied to allow a third person to confirm the safety or track the person carrying communication terminal 70 can be provided.

Communication terminal 70 according to an embodiment of the present invention transmits a message corresponding to a combination of identification information in the case where the combination of identification information corresponding to a radio wave having at least a portion of the reception period overlapping matches the combination of identification information stored in memory 142. Determination of whether there is a match or not can be made more clearly for the combination of identification information as compared to the combination of the intensity of a radio wave. Accordingly, the possibility of the actual location of the person carrying communication terminal 70 differing from the site identified based on the message becomes extremely low. Thus, a communication terminal reduced in the possibility of erroneous location of the person carrying communication terminal 70 can be provided.

Communication terminal 70 according to the present embodiment transmits a message to a base station when the combination of the identification information differing in the access point of the transmission source matches the combination of identification information stored in memory 142. The area allowing communication with one access point is generally smaller than the area allowing communication with one base station. The same can be said in the case where the intensity at the transmission source is lower for the radio wave used for determination of the location than for the radio wave used for message transmission, likewise the case of an access point. In this case, the error in the current location is significantly reduced than when determination is made based on a base station. Furthermore, since an access point can be readily installed at the user's house, the third person can identify more readily whether the person carrying communication terminal 70 has safely arrived home or not. Rapid communication with communication terminal 71 by means of an access point is more difficult than communication through a base station. This is because a procedure for log in as well as for communication through an access point is required. Rapid communication is allowed if a mail is transmitted utilizing a base station. As a result, a communication terminal that allows rapid notification of information of high accuracy to a third person can be provided.

Communication terminal 70 according to the present embodiment transmits information representing the time together with the message. By transmitting both time information and a message, a third person can readily identify when and where the person carrying communication terminal 70 has gone as well as the period of time spent at the specific site. Since the third person can readily identify the same, the search for the person carrying communication terminal 70, when missing, can be readily facilitated. Thus, a communication terminal that allows a third person to efficiently track the person carrying communication terminal 70 can be provided.

Communication terminal 70 of the present embodiment transmits text data representing a message in the form of a mail. In the case where communication terminal 71 is not in a receivable state, the mail is once stored at central control station 124 or the like and retransmitted automatically to communication terminal 71 afterwards. Accordingly, the reliability of message transmission can be improved. Thus, a communication terminal of high reliability can be provided.

Communication terminal 70 of the present embodiment automatically places a phone call to the third person when the combination of element information corresponding to a radio wave having at least a portion of the reception period overlapping corresponds to the combination of element information stored in memory 142. The telephone is a medium that can definitely transmit information as compared to the case where information is transmitted by another medium, as long as a state that allows conversation is established. Thus, a communication terminal that allows a third party to be notified effectively of the whereabouts of the person carrying communication terminal 70 can be provided.

Communication terminal 70 of the present embodiment transmits a message in the case where the intensity difference for all the radio waves is within a range of a tolerable value between the combination of the intensity of the received radio wave and the combination of the intensity of the radio wave stored in memory 142. The area where a radio wave not representing identification information is transmitted is extremely larger than the area where a radio wave representing such information is transmitted. Therefore, a message can be transmitted at various types of sites in the case where the whereabouts of the person carrying communication terminal 70 is determined based on the combination of the intensity of radio wave, as compared to the case where the whereabouts of the person carrying communication terminal 70 is determined based on the combination of identification information. Thus, a communication terminal that allows notification of the person carrying communication terminal 70 at various types of sites can be provided.

Communication terminal 70 of the present embodiment transmits a message in the case where the intensity difference for all the radio waves is within a range of a tolerable value between the combination of the intensity of a received radio wave and the combination of the intensity of a radio wave stored in memory 142, even if the combination of the identification information having a different access point of the transmission source does not match the combination of identification information stored in memory 142. By employing identification information for the determination of the whereabouts in priority and utilize the information of the intensity of a radio wave in an auxiliary manner, information indicating the whereabouts of the person carrying communication terminal 70 can be notified as properly as possible to the third person. Thus, a communication terminal that can notify the whereabouts of a person carrying communication terminal 70 as properly as possible can be provided.

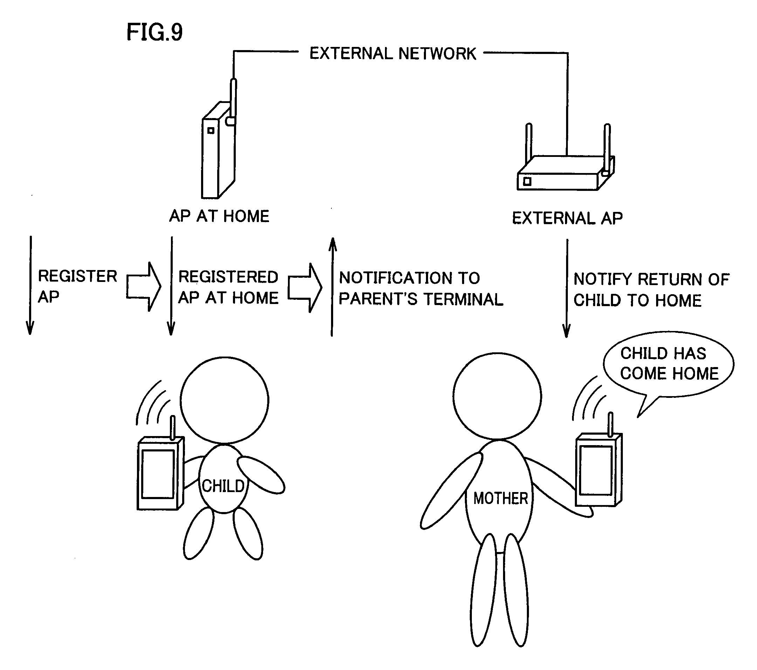

As a first modification, text transmission unit 194 may control LAN antenna 131 and transmission and reception unit 132 at step S344. In this case, a mail addressed to communication terminal 71, generated by text generation unit 192, is transmitted as a pseudo mail through the Internet. Fig. 9 is a schematic diagram representing the route of a mail according to the present modification in the case where an access point installed at home and an access point of a public LAN are employed. In Fig. 9, "AP" refers to an access point.

As a second modification, communication terminal 70, 71 may be a portable telephone or another communication terminal.

As a third modification, the safety confirmation system may include a plurality of communication terminals, base stations, PHS connection devices, and in-city exchanges, larger in number than those shown in Fig. 2. Alternatively, the number of base stations, PHS connection devices, and in-city exchange may be lower than those shown in Fig. 2.

As a fourth modification, the role of communication terminal 71 can be conducted by a landline phone. Alternatively, the hardware configuration of communication terminal 71 may differ from that of communication terminal 70.

As a fifth modification, text generation unit 192 and audio generation unit 196 may both implement the process of mail transmission and making a phone call at step S332.

As a sixth modification, an ESSID (Extended Service Set Identifier) may be employed instead of SSID.

As a seventh modification, audio generation unit 196 may be a device that generates audio data in the case where information representing that central control station 124 responds to a call is output at step 362. Accordingly, even in the case where the person with communication terminal 71 is temporarily in a state not allowing to response to a call, communication terminal 71 can receive a voice message from central control station 124 subsequently when attaining a state capable of accepting an incoming call.

As an eighth modification, a radio wave may be received from a transmission device that transmits identification information to identify the transmission device of the transmission source, instead of an access point. In this case, the current position of communication terminal 70 is determined based on the combination of identification information received from a plurality of transmission devices.

Although the present invention has been described and illustrated in detail, it is clearly understood that the same is by way of illustration and example only and is not to be taken by way of limitation, the scope of the present invention being interpreted by the terms of the appended claims.

## Claims

1. A communication terminal (70,71) comprising:
a communication unit (132) for communication,
an information acquiring unit (182) for acquiring, from a radio wave received by said communication unit, element information corresponding to said radio wave,
an input (136) for entry of a message,
a storage unit (142),
a teaching control unit (184) responding to entry of said message at said input unit to store a plurality of types of element information corresponding to each of a plurality of radio waves from transmission sources different from each other and the entered message in correspondence in said storage unit, and
a transmission control unit (186) transmitting, when a combination of a plurality of types of element information corresponding to each of the plurality of radio waves from the transmission sources different from each other, acquired at said information acquirement unit, is identical to the combination of element information stored in said storage unit, said message corresponding to the combination of said element information stored in said storage unit.

2. The communication terminal according to claim 1, wherein
said information acquirement unit extracts identification information from a radio wave received by said communication unit,
said teaching control unit stores a plurality of types of identification information corresponding to each of said plurality of radio waves transmitted from said transmission sources different from each other and said message in correspondence, and
said transmission control unit transmits said message corresponding to a combination of identification information stored in said storage unit when a combination of said plurality of types of identification information corresponding to each of said plurality of radio waves from transmission sources different from each other, acquired at said information acquirement unit, is identical to the combination of said identification information stored in said storage unit.

3. The communication terminal according to claim 2, wherein
said communication unit comprises
a network reception unit (166) for receiving a radio wave transmitted by an access point, and
a base station communication unit (160) for communication with a base station,
said information acquirement unit extracts identification information from said radio wave received by said network reception unit, and
said transmission control unit transmits towards said base station said message corresponding to the combination of said identification information stored in said storage unit via said base station communication unit when the combination of the plurality of types of identification information corresponding to each of said plurality of radio waves from transmission sources different from each other, acquired at said information acquirement unit, is identical to the combination of said identification information stored in said storage unit.

4. The communication terminal according to claim 1, wherein said transmission control unit comprises
a detection unit (190) for detecting a time,
a text generation unit (192) for generating text data indicating said message corresponding to the combination of said identification information stored in said storage unit and information representing the time detected by said detection unit, when the combination of the plurality of types of element information corresponding to each of said plurality of radio waves from transmission sources different from each other, acquired at said information acquirement unit, is identical to the combination of said identification information stored in said storage unit, and
a text data transmission unit (194) transmitting the generated text data.

5. The communication terminal according to claim 1, wherein
said storage unit stores said message as audio data,
said communication control unit comprises
a detection unit (190) for detecting a time,
a call control unit (198) for controlling said communication unit such that a calling signal is transmitted when the combination of the plurality of types of element information corresponding to each of said plurality of radio waves from transmission sources different from each other, acquired at said information acquirement unit, is identical to the combination of said identification information stored in said storage unit
an audio generation unit (196) generating audio data indicating the time when said communication unit receives a response signal corresponding to said calling signal,
an audio transmission unit (200) sequentially transmitting audio data corresponding to said message stored in said storage unit and audio data indicating the time, and
a cutoff control unit (202) for controlling said communication unit such that a signal indicating an end of a conversation is transmitted after transmission of said audio data ends.

6. The communication terminal according to claim 1, wherein
said information acquirement unit comprises
an extraction unit (210) for extracting a signal from a radio wave received by said communication unit, and
a measurement unit (212) for measuring, when said extraction unit extracts said signal, intensity of said radio wave based on said signal extracted by said extraction unit to generate intensity information representing the intensity of said radio wave,
said teaching control unit stores a plurality of types of intensity information corresponding to each of said plurality of radio waves from transmission sources different from each other and said message in correspondence, and
said transmission control unit transmits said message corresponding to the combination of said intensity information stored in said storage unit when a difference in intensity for all of said radio waves is within a range of a tolerable value between a combination of the plurality of types of intensity information corresponding to each of said plurality of radio waves from transmission sources different from each other, acquired at said information acquirement unit, and a combination of intensity of said radio wave representing said intensity information stored in said storage unit.

7. A communication method for a communication terminal, comprising the steps of:
receiving a radio wave,
acquiring, from the received radio wave, element information corresponding to said radio wave,
entering a message,
when said message is entered, receiving a plurality of radio waves from transmission sources different from each other to store a plurality of types of element information corresponding to each of the plurality of radio waves and the entered message in correspondence in said storage unit, and
receiving said plurality of radio waves from transmission sources different from each other, and transmitting said message corresponding to the combination of said element information stored in said storage unit, when a combination of a plurality of types of element information corresponding to each of the plurality of radio waves is identical to the combination of element information stored in said storage unit.
